(19) Europäisches Patentamt
European Patent Office
Office européen des brevets

(11) EP 0 938 590 B1

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(21) Anmeldenummer: **97951194.6**

(22) Anmeldetag: **13.11.1997**

(51) Int Cl.7: **C14C 9/00**, C08G 77/388, C08L 83/08, C09D 183/08, D06M 15/643

(86) Internationale Anmeldenummer:
**PCT/EP97/06348**

(87) Internationale Veröffentlichungsnummer:
**WO 98/21369 (22.05.1998 Gazette 1998/20)**

(54) **VERWENDUNG VON CARBOXYAMID-POLYSILOXANEN ZUR LEDERHYDROPHOBIERUNG**
USE OF CARBOXYAMIDE-POLYSILOXANES FOR WATER-PROOFING LEATHER
UTILISATION DE POLYSILOXANES DE CARBOXYAMIDE POUR IMPERMEABILISER LE CUIR

(84) Benannte Vertragsstaaten:
**DE ES GB IT**

(30) Priorität: **13.11.1996 DE 19646916**

(43) Veröffentlichungstag der Anmeldung:
**01.09.1999 Patentblatt 1999/35**

(73) Patentinhaber: **BASF AKTIENGESELLSCHAFT
67056 Ludwigshafen (DE)**

(72) Erfinder:
- **FRIEDRICH, Holger
D-67240 Bobenheim-Roxheim (DE)**
- **KNEIP, Michael
D-67069 Ludwigshafen (DE)**
- **LEUTNER, Bernd
D-67227 Frankenthal (DE)**

(74) Vertreter: **Isenbruck, Günter, Dr. et al
Patent- und Rechtsanwälte,
Bardehle-Pagenberg-Dost-Altenburg-Geissler-I
senbruck Theodor-Heuss-Anlage 12
68165 Mannheim (DE)**

(56) Entgegenhaltungen:
**EP-A- 0 324 345**
**DE-A- 4 240 274**
**DE-A- 4 404 890**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 938 590 B1

Printed by Jouve, 75001 PARIS (FR)

## Beschreibung

Die Erfindung betrifft die Verwendung von Carboxyamid-Polysiloxanen der allgemeinen Formel IV

$$\begin{array}{ccc} B & R'_b & R''_3 \\ | & | & | \\ [R_a\text{-}SiO_{(3-a)/2}]_n\text{-} & [SiO_{(4-b)/2}]_m\text{-} & [SiO_{1/2}]_k \end{array} \qquad (IV)$$

wobei R, R' und R" jeweils unabhängig voneinander ausgewählt sind aus $C_{1-6}$-Alkyl oder Phenyl, oder Carboxyamid-Polysiloxanen der allgemeinen Formel IVa

$$\begin{array}{ccc} B & R'_b & R''_2R''' \\ | & | & | \\ [R_a\text{-}SiO_{(3-a)/2}]_n\text{-} & [SiO_{(4-b)/2}]_m\text{-} & [SiO_{1/2}]_k \end{array} \qquad (IVa)$$

wobei R' und R" unabhängig voneinander ausgewählt sind aus $C_{1-6}$-Alkyl oder Phenyl, R und R"' unabhängig ausgewählt sind aus $C_{1-6}$Alkyl, $C_{1-6}$-Alkoxy, OH oder Phenyl, und die Zahl der Arten der durch

$$\begin{array}{c} R'_b \\ | \\ -\ [SiO_{(4-b)/2}]_m \end{array}$$

definierten strukturellen Einheiten mindestens 1 beträgt und a aus dem Bereich $0 \leq a \leq 2$ und b aus dem Bereich $1 \leq b \leq 3$ ausgewählt ist, und die durch die Variablen m, n, k festgelegte Zahl der Wiederholungen der Arten von strukturellen Einheiten aus den Bereichen

$1 \leq n \leq 60$,
$20 \leq m \leq 800$ und
$O \leq k \leq \{(2-b)m + [(1-a)n + 2]\}$ ausgewählt ist,
sowie B einen organischen Rest der allgemeinen Formel V darstellt,

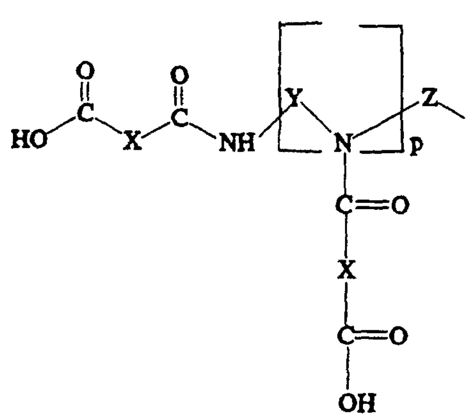

(V)

wobei p = 0 - 10 und

Y und Z unabhängig voneinander jeweils einen divalenten Kohlenwasserstoffrest aus der Gruppe der aliphatischen Kohlenwasserstoffe oder einen divalenten Alkoxyalkylrest darstellen, und

X ein divalenter Kohlenwasserstoffrest aus der Gruppe von $-(CH_2)_y-$ mit $2 \leq y \leq 6$, $-CH_2-CHR^5-$ oder $-CHR^5-CH_2-$ mit $R^5$ $C_{1-20}$-Alkyl oder $C_{2-20}$-Alkenyl, -CH=CH-, cyclischen oder bicyclischen gesättigten oder ungesättigten Kohlenwasserstoffen oder der aromatischen Kohlenwasserstoffe darstellt, wobei wahlweise ein Teil der Substituenten B durch die Substituenten A der nachfolgenden Formel II

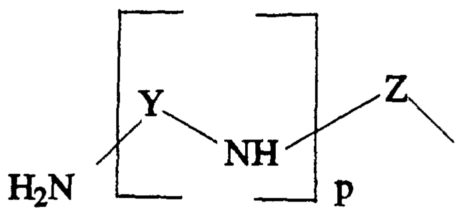

(II)

wobei Y, p, Z wie vorstehend definiert sind, oder durch die Substituenten C der nachfolgenden Formel VII

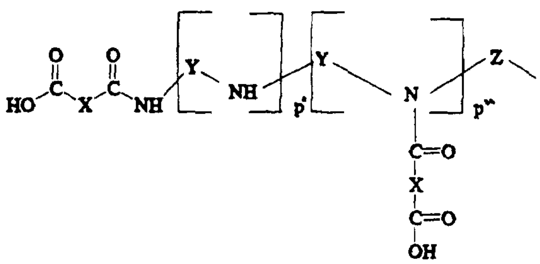

(VII)

wobei p' + p" = p und X, Y, Z wie vorstehend definiert sind, ersetzt ist,

wobei die Carboxyamid-Polysiloxane der genannten Formel IV oder IVa einen Carboxylgruppengehalt von 0,02 bis 1,0 meq/g sowie eine Molmasse im Bereich von $2 \times 10^3$ bis $60 \times 10^3$ g/Mol aufweisen,

zur Hydrophobierung von Materialien faseriger Struktur, insbesondere von Leder oder Pelzfellen.

Bei der Hydrophobierung von Leder finden allgemein Siliconöle und funktionelle Siloxane Anwendung. Dabei verwendet man bevorzugt carboxylgruppenhaltige Polysiloxane. Unter dem Begriff "carboxylgruppenhaltig" werden an dieser Stelle und im folgenden sowohl undissoziierte COOH-Gruppen als auch $COO^-$-Gruppen nach Dissoziation verstanden. Bei Einsatz dieser Verbindungen kann die Lederbehandlung in einer wäßrigen Flotte durchgeführt werden. Außerdem kann auf eine Nachbehandlung mit Metallsalzen und den Einsatz von Emulgatoren und Lösungsmitteln verzichtet werden. Derartige carboxylgruppenhaltige Polysiloxane sind in der DE-A 35 29 869, DE-A 38 00 629 sowie WO-A 95/22627 beschrieben.

Die Gebrauchseigenschaften und die anwendungstechnischen Ergebnisse derartiger Siliconölemulsionen sind jedoch noch nicht optimal. Insbesondere sind weitere Verbesserungen der Stabilität der Emulsionen bei der Lagerung wünschenswert. Außerdem ist die Stärke des hydrophobierenden Effekts sowie dessen Dauerhaftigkeit bei Verwendung der bekannten carboxylgruppenhaltigen Polysiloxane nicht befriedigend. Des weiteren ist auch eine Verbesserung der Verträglichkeit mit Paraffinölemulsionen - wie sie bei der Hydrophobierung von Leder verwendet werden - wünschenswert. Die in den vorstehend genannten Offenlegungsschriften beschriebenen carboxylgruppenhaltigen Polysiloxane haben außerdem den Nachteil, daß sie nur begrenzt im technischen Maßstab verfügbar und darüber hinaus teuer sind.

Besser zugängliche funktionelle Siloxane sind aminoalkylfunktionelle Siloxane (nachfolgend auch Aminosiloxane genannt). Diese sind häufig auch kostengünstiger als die carboxylgruppenhaltigen Polysiloxane. Bei Einsatz der Aminosiloxane für die Lederhydrophobierung bzw. -imprägnierung hat sich jedoch gezeigt, daß diese sich dafür nur begrenzt eignen. Insbesondere ist ihre hydrophobierende Wirkung deutlich schlechter. Außerdem ist die Haftung der Aminosiloxane auf chromgegerbtem Leder sehr gering, weshalb auch die Dauerhaftigkeit der hydrophobierenden Wirkung zu wünschen übrig läßt. Als ein weiterer Nachteil hat sich gezeigt, daß es bei Einsatz von Aminosiloxanen zu unerwünschten Vergilbungen kommt.

Aus der DE-A 42 14 150 ist ein Verfahren zur Hydrophobierung von Materialien faseriger Struktur bekannt,

bei dem Sulfobernsteinsäureester von reaktiven Siloxanen verwendet werden.

Aus der EP-A 0 095 676 sowie Polymer Bulletin 32, Seiten 173-178 (1994) ist die Überführung von Aminoalkylsiloxanen in sogenannten Carboxyamid-Polysiloxane bekannt. Derartige Carboxyamid-Polysiloxane werden auch als "carboxyfunktionalisierte Aminoalkylsiloxane" bezeichnet. Gemäß der EP-A 0 095 676 werden derartige Carboxyamid-Polysiloxane für Textilien und Gewebe verwendet. Sie verleihen diesen Stoffen eine gewisse Weichheit sowie ein gewisses Wasserabstoßungsvermögen. Außerdem können diese Verbindungen auch als Trenn- oder Gleitmittel für metallische Substrate eingesetzt werden.

Angesichts des vorstehend Gesagten ist es Aufgabe der Erfindung, Hydrophobierungsmittel für Leder bereitzustellen, die hinsichtlich der Kostengünstigkeit, der Stärke und Dauerhaftigkeit des Hydrophobierungseffektes sowohl gegenüber den bislang bekannten carboxylgruppenhaltigen Polysiloxanen als auch den aminoalkylfunktionellen Siloxanen verbessert sind.

Diese Aufgabe wird durch Verwendung von Carboxyamid-Polysiloxanen der allgemeinen Formel IV

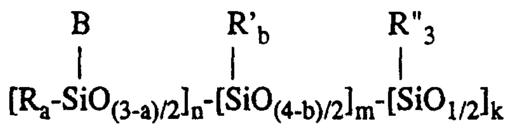

(IV)

wobei R, R'und R" jeweils unabhängig voneinander ausgewählt sind aus $C_{1-6}$-Alkyl oder Phenyl, oder Carboxyamid-Polysiloxanen der allgemeinen Formel IVa

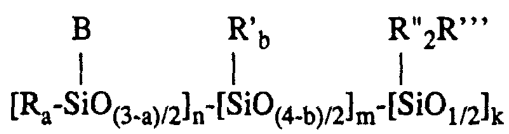

(IVa)

wobei R' und R" unabhängig voneinander ausgewählt sind aus $C_{1-6}$-Alkyl oder Phenyl, R und R''' unabhängig ausgewählt sind aus $C_{1-6}$Alkyl, $C_{1-6}$-Alkoxy, OH oder Phenyl, und die Zahl der Arten der durch

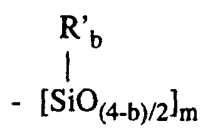

definierten strukturellen Einheiten mindestens 1 beträgt und a aus dem Bereich $0 \leq a \leq 2$ und b aus dem Bereich $1 \leq b \leq 3$ ausgewählt ist, und die durch die Variablen m, n, k festgelegte Zahl der Wiederholungen der Arten der strukturellen Einheiten aus den Bereichen

$1 \leq n \leq 60$, vorzugsweise $1 \leq M \leq 10$,
$20 \leq m \leq 800$, vorzugsweise $20 \leq m \leq 150$ und
$0 \leq k \leq \{(2-b)m + [(1-a)n + 2]\}$ ausgewählt ist,
sowie B einen organischen Rest der allgemeinen Formel V darstellt,

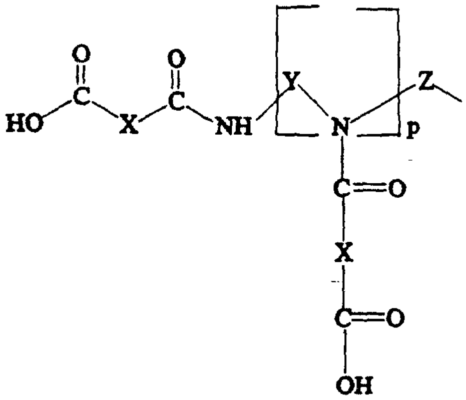

(V)

wobei p = 0 - 10, vorzugsweise 0 oder 1, und
Y und Z unabhängig voneinander jeweils einen divalenten Kohlenwasserstoffrest aus der Gruppe der aliphatischen Kohlenwasserstoffe oder einen divalenten Alkoxyalkylrest darstellen, und
X ein divalenter Kohlenwasserstoffrest aus der Gruppe von $-(CH_2)_y-$ mit $2 \leq y \leq 6$, vorzugsweise $2 \leq y \leq 4$, $-CHR^5-CH_2-$, $-CH_2-CHR^5-$ mit $R^5$ $C_{1-20}$-Alkyl oder $C_{2-20}$-Alkenyl, -CH=CH-, cyclischen oder bicyclischen, gesättigten oder ungesättigten Kohlenwasserstoffen oder der aromatischen Kohlenwasserstoffe darstellt, wobei wahlweise ein Teil der Substituenten B durch die Substituenten A der nachfolgenden Formel II

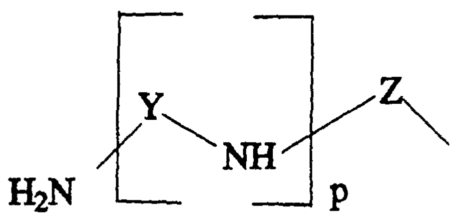

(II)

wobei Y, p, Z wie vorstehend definiert sind, oder durch die Substituenten C der nachfolgenden Formel VII

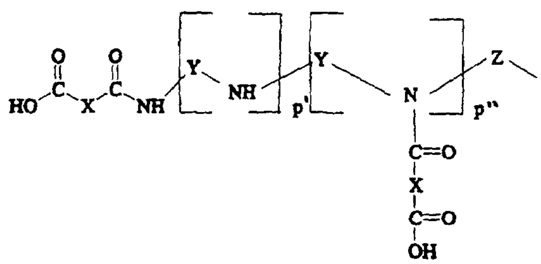

(VII)

wobei p' + p" = p und X, Y, Z wie vorstehend definiert sind, ersetzt ist,
wobei die Carboxyamid-Polysiloxane der genannten Formel IV oder IVa einen Carbo-xylgruppengehalt von 0,02 bis 1,0 meq/g sowie eine Molmasse im Bereich von 2 x $10^3$ bis 60 x $10^3$ g/Mol aufweisen,
zur Hydrophobierung von Materialien faseriger Struktur, insbesondere von Leder oder Pelzfellen, gelöst.

Unter der Molmasse wird hier und im folgenden die mittlere Molmasse (Zahlenmittel) [$M_n$] verstanden.

Eine bevorzugte Lösung der Aufgabe stellt die Verwendung der vorstehend genannten Carboxyamid-Polysiloxane dar, bei denen B einen organischen Rest der allgemeinen Formel V darstellt,

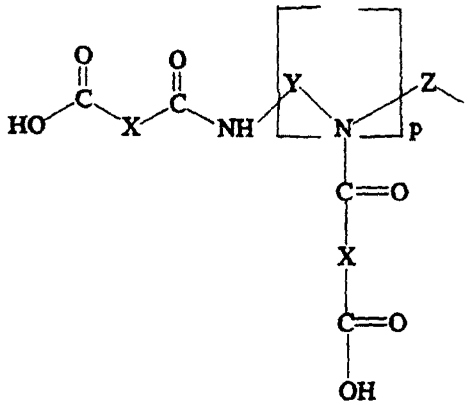

(V)

in dem p = 0 oder 1, X = $-CH_2CH_2-$, $-CHR^5-CH_2-$, $-CH_2-CHR^5-$ mit $R^5$ $C_{1-20}$-Alkyl oder $C_{2-20}$-Alkenyl, -CH=CH- oder

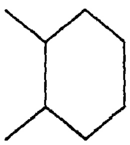 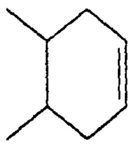 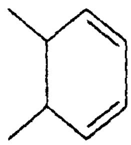 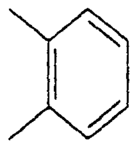 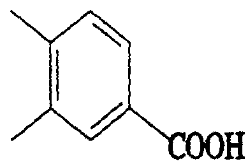

sind, Y = $-CH_2CH_2-$ und Z = $-CH_2CH_2CH_2-$ ist.

Die für die erfindungsgemäße Verwendung durch Umsetzung der aminofunktionellen Siloxane gemäß der allgemeinen Formel I

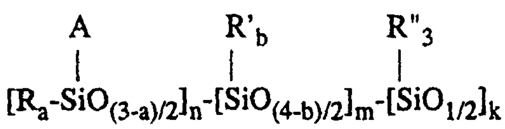

(I)

wobei R, R'und R" jeweils unabhängig voneinander ausgewählt sind aus $C_{1-6}$-Alkyl oder Phenyl, oder aminofunktionellen Polysiloxanen der allgemeinen Formel Ia

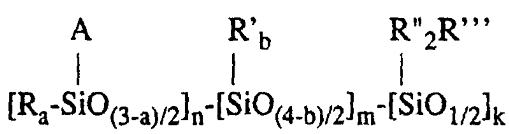

(Ia)

wobei R'und R" unabhängig voneinander ausgewählt sind aus $C_{1-6}$-Alkyl oder Phenyl, R und R'" unabhängig ausgewählt sind aus $C_{1-6}$Alkyl, $C_{1-6}$-Alkoxy, OH oder Phenyl, und die Zahl der Arten der durch

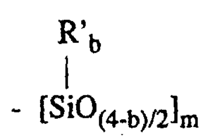

definierten strukturellen Einheiten mindestens 1 beträgt, wobei a aus den Bereich $O \leq a \leq 2$ und b aus dem Bereich $1 \leq b \leq 3$ ausgewählt ist, und die durch die Variablen m, n, k festgelegte Zahl der Wiederholungen der Arten von strukturellen Einheiten aus den Bereichen

$1 \leq n \leq 60$, vorzugsweise $1 \leq M \leq 10$
$20 \leq m \leq 800$ und vorzugsweise $20 \leq m \leq 150$ und
$O \leq k \leq \{(2-b)m + [(1-a)n + 2]\}$ ausgewählt ist,

sowie A einen organischen Rest der allgemeinen Formel II darstellt,

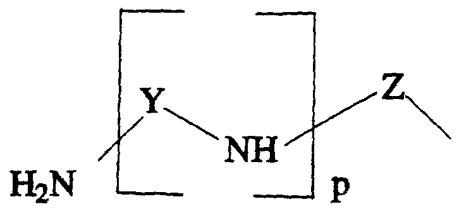

(II)

mit den Dicarbonsäureanhydriden der allgemeinen Formel III

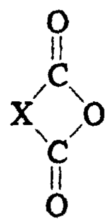

(III)

wobei X ein divalentes Kohlenwasserstoffradikal aus der Gruppe von $-(CH_2)_y$ mit $2 \leq y \leq 6$, $-CH_2-CHR^5-$ oder $-CHR^5-CH_2-$ mit $R^5$ $C_{1-20}$-Alkyl, vorzugsweise $C_{5-15}$-Alkyl oder $C_{2-20}$-Alkenyl, vorzugsweise $C_{6-18}$-Alkenyl, insbesondere Oct-2-enyl, Dec-2-enyl, Hexadec-2-enyl, Dodec-2-enyl, Octadec-2-enyl, -CH=CH-, cyclischen oder bicyclischen gesättigten oder ungesättigten Kohlenwasserstoffen oder der aromatischen Kohlenwasserstoffen darstellt, erhaltenen carboxyfunktionellen Siloxancopolymere bzw. Carboxyamid-Polysiloxane weisen eine Struktur gemäß der nachfolgend genannten Formel IV oder der vorstehend angegebenen Formel IVa auf:

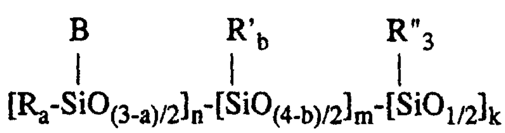

(IV)

wobei R, R', R", m, n, a, b und k die bereits genannte Bedeutung haben, sowie

B einen organischen Rest der nachfolgend angegebenen allgemeinen Formel V darstellt

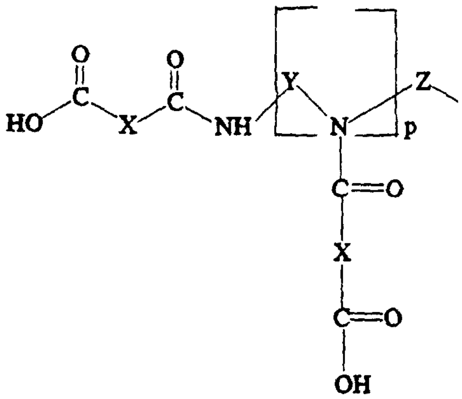

(V)

wobei p, X, Y und Z ebenfalls die vorstehend genannten Bedeutungen zeigen.

Bevorzugte aminofunktionalisierte Siloxane sind herstellbar aus den nachstehenden Verbindungen 1, 2 und 3:

$$A\text{-}SiR''_gR_{3-g} \quad (1)$$

cyclischen

$$(SiR'_2\text{-}O\text{-})_h \quad (2a)$$

oder
linearen

$$HO\text{-}(SiR'_2\text{-}O\text{-})_hH \text{ oder } R'_3Si\text{-}O\text{-}(SiR'_2\text{-}O\text{-})_hSiR'_3 \quad (2b)$$

$$R''_3Si\text{-}O\text{-}SiR''_3 \quad (3)$$

mit

g = 0 - 3, d.h. 0, 1, 2 oder 3, vorzugsweise 0 oder 3
h = 3 - 10, vorzugsweise 3 - 5

und den vorstehend angegebenen Bedeutungen für A, R, R' und R"

Dabei sind R' und R" vorzugsweise $C_{1-3}$-Alkyl, insbesondere Methyl. R ist vorzugsweise $C_{1-3}$-Alkoxy, insbesondere Methoxy, Ethoxy oder OH.

Die Verbindungen werden unter basischen Bedingungen, vorzugsweise in Gegenwart von KOH umgesetzt.

Für den Fall g = 0, R = $OCH_3$, R'=$CH_3$, R" = $CH_3$ ergeben sich im Siloxan folgende Grundbausteine:

$$(CH_3)_3Si\text{-}O_{1/2},\ (CH_3)_2Si(O_{1/2})_2,\ CH_3Si(O_{1/2})_3,\ (CH_3)_2(CH_3O)Si\text{-}O_{1/2},$$

$A\text{-}Si(OCH_3)_2(O_{1/2})$, $A\text{-}Si(OCH_3)(O_{1/2})_2$, $A\text{-}Si(O_{1/2})_3$.

Im so erhaltenen aminofunktionellen Siloxen beträgt die Aminzahl vorzugsweise 0,1 bis 0,5 meq/g. Das Molverhältnis von Verbindung (1) zu Verbindung (2)/h beträgt vorzugsweise 0,00375 bis 0,0375.

Anstelle der Verbindung (1) kann auch die entsprechende bereits amidierte Verbindung $B\text{-}SiR''_gR_{3-g}$ eingesetzt werden.

Verbindung (1) dient zur Funktionalisierung, Verbindung (2) zum Kettenaufbau und Verbindung (3) zur Terminierung.

Die eingesetzten aminofunktionellen Siloxane haben eine Viskosität im Bereich von 20 $mm^2/s$ bis 10000 $mm^2/s$. Dies entspricht näherungsweise einer Molmasse im Bereich von 2 x $10^3$ bis 60 x $10^3$ g/Mol. Werden Aminosiloxane eingesetzt, deren Viskosität oberhalb des genannten Bereichs liegt, so haben die daraus erhaltenen Carboxyamid-Polysiloxane meist keine zufriedenstellenden Eigenschaften. Insbesondere sind die Produkte dann häufig nicht homogen und/oder aufgrund zu hoher Viskosität nicht mehr rührbar. Wenn andererseits die Molmasse des eingesetzten Aminosiloxans den genannten Bereich unterschreitet, so ist die hydrophobierende Wirkung des hergestellten Carboxyamid-Polysiloxans bezüglich Leder schlecht und/oder seine Verarbeitbarkeit nicht zufriedenstellend. Bevorzugt eingesetzte Aminosiloxane haben eine Viskosität im Bereich von 50 bis 500 $mm^2/s$.

Die erfindungsgemäß verwendeten Carboxyamid-Polysiloxane weisen einen Carboxylgruppengehalt von 0,02 bis 1,0 meq/g auf, bevorzugt jedoch 0,2 bis 0,5 meq/g. Der Ausdruck "Carboxylgruppen" bezieht sich in diesem Fall auf die freien - dissoziierten oder undissoziierten - Carbonsäurefunktionen.

Ein Teil der durch B repräsentierten organischen Reste der allgemeinen Formel V, kann durch die Reste A gemäß der vorstehend genannten Formel II und/oder durch Reste C gemäß der genannten Formel VII ersetzt sein. Derartige Produkte entstehen durch nicht vollständig stöchiometrische Umsetzung der Aminogruppen in den Seitenketten des Polysiloxans mit den Dicarbonsäureanhydriden gemäß der allgemeinen Formel III. Dabei setzt man vorteilhafterweise 0,4 - 1 Mol Säureanhydrid je Moläquivalent Amin ein.

Werden 0,5 Mol oder weniger Säureanhydrid pro Moläquivalent Amin eingesetzt, kann man bei der anschließenden Herstellung der wäßrigen Dispersion auf den Einsatz eines Amins zur Neutralisierung verzichten. Beispielsweise wird bei Umsetzung von 1 g eines Aminoalkylsiloxans mit 0,15 meq/g $NH_2$-$CH_2CH_2NHCH_2CH_2CH_2$-Resten (das entspricht einer Aminzahl von 0,3 meq/g, da pro Rest 2 Aminogruppen vorhanden sind) mit 0,15 mMol eines Säureanhydrides ein Siloxan mit folgendem funktionellen Rest erhalten:

$$HOOC\text{-}X\text{-}CO\text{-}NH\text{-}CH_2CH_2NHCH_2CH_2CH_{2\text{-}}$$

$$= {}^{-}OOC\text{-}X\text{-}CO\text{-}NH_2\text{-}CH_2CH_2NH^{+}\ {}_2CH_2CH_2CH_2$$

(Rest als Zwitterion geschrieben)

Bevorzugt werden die Umsetzungsprodukte gemäß der vorstehend genannten Formeln IV oder IVa zur Hydrophobierung als wäßrige stabile Emulsion eingesetzt, stärker bevorzugt als wäßrige Emulsionen mit einem Siloxangehalt von 3 bis 90 Gew.-%, insbesondere 5 bis 60 Gew.-%, besonders bevorzugt 7 bis 40 Gew.-%.

Die Herstellung der wäßrigen Emulsionen erfolgt nach den in der DE-A 35 29 865, DE-A 38 00 629 und WO-A 95/22627 beschriebenen Verfahren, etwa indem das carboxyfunktionelle Siloxan mit Wasser und einem Amin oder Ammoniak oder Natronlauge oder Kalilauge (oder einer Kombination der Verbindungen) bei Temperaturen zwischen 0 bis 100°C, bevorzugt bei 20 bis 70°C, gut vermischt werden. Die Reihenfolge, in der die Komponenten zusammengefügt werden, ist dabei gleichgültig. Die wäßrige Mischung wird anschließend in einem geeigneten Homogenisator (z.B. Spalt-homogenisator) zu einer Emulsion verarbeitet. Vor der Emulgierung können zusätzlich die weiter unten aufgeführten Öle und Emulgatoren zugefügt werden. Diese werden bevorzugt vor der Homogenisierung eingemischt.

Als weiterer Zusatz werden Öl- oder Fettsäuren in einer Konzentration zwischen 0,1 bis 5 Gew.-% zu der Emulsion zugesetzt.

Insbesondere handelt es sich bei den Siloxanen der allgemeinen Formel I oder Ia und IV oder IVa um lineare Siloxane mit terminalen organofunktionellen Gruppen, bei denen n = 2, a = 2, b = 2, R = R' = R" = $CH_3$, R"' = $OCH_3$ oder OH, X = -$CH_2$-$CH_2$- Y = -$CH_2CH_2$-, Z = -$CH_2CH_2CH_2$- und p = 0 oder 1 ist, wobei die anderen Substituenten und Variablen die bereits genannte Bedeutung haben. Besonders bevorzugt sind unter den Siloxancopolymeren der allgemeinen Formel I oder Ia und IV oder IVa lineare Siloxane mit terminalen Trimethoxysilylresten und seitlichen organofunktionellen Gruppen, bei denen n = 1 bis 5, m = 10 bis 130, a = 1, b = 2, R = R' = R" = $CH_3$, R"'= $OCH_3$ oder OH, X = -CH2-$CH_2$-, Y = -$CH_2CH_2$-, Z = -$CH_2CH_2CH_2$- und p = 0 oder 1 ist und die anderen Substituenten und Variablen die genannte Bedeutung haben. Am stärksten bevorzugt ist p = 0. Vor dem Emulgieren ist R"' in der Regel $OCH_3$, beim Kontakt mit Wasser erfolgt zumindest teilweise Hydrolyse zu OH.

Die Siloxane der allgemeinen Formel I oder Ia bzw. IV oder IVa besitzen vorzugsweise Molmassen im Bereich zwischen 3000 und 10000. Es kommen entweder lineare, verzweigte oder cyclische Siloxane in Betracht, wobei die linearen oder verzweigten Siloxane Silanol-, Kohlenwasserstoff- oder Trior-ganosiloxyendgruppen aufweisen können. Bei einer bevorzugten Variante werden lineare oder verzweigte Siloxane zur Hydrophobierung verwendet, die Endgruppen der folgenden Formel VI

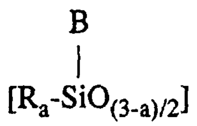

(VI)

mit a = 2 aufweisen.

Ferner können die in Formel I oder Ia und IV oder IVa beschriebenen Siloxancopolymere verschiedene Siloxyeinheiten besitzen, die durch unterschiedliche Quotienten der Variablen a/n und/oder b/m gekennzeichnet sind. So kann ein Siloxancopolymer z.B. lineare Einheiten

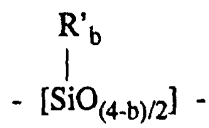

enthalten, bei denen b = 2 ist. Zugleich weist es Verzweigungspunkte auf, bei denen b = 1 bedeutet.

Das gleiche gilt für die wiedergegebenen Siloxaneinheiten der folgenden Struktur:

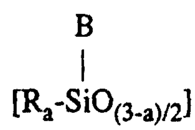

Als Reste R, R' oder R" kommen bevorzugt Methyl-, Phenyl- oder Ethylreste in Betracht, besonders bevorzugt ist R = R' = Me.

Bei den Resten X handelt es sich bevorzugt um folgende divalente Kohlenwasserstoffreste: -CH=CH- oder $-CH_2-CH_2-$, $-C(R^1R^2)-CH_2-$, wobei $R^1$ oder $R^2 = -(CH=CH)_d(CR^3R^4)_k-Q$, mit $0 \leq d \leq 2$, $0 \leq k \leq 30$, wobei Q ausgewählt aus H, COOH; $R^3$ oder $R^4$ gleich H oder $CH_3$ oder

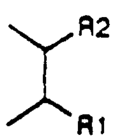 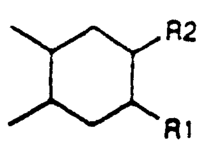 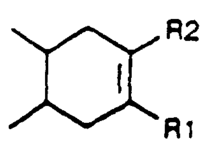 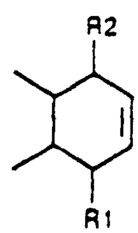 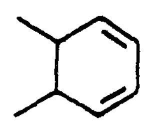

wobei $R^1$, $R^2$ unabhängig voneinander sind und H, $C_1$ - $C_{30}$-Alkyl (linear oder verzweigt), z.B. Methyl, Ethyl usw., oder $C_2$ - $C_{30}$-Alkenyl (linear oder verzweigt), z.B. Allyl, Hexenyl, Dodecenyl usw., oder Phenyl oder substituierte Arylverbindungen sind, wobei die Substituenten bevorzugt Chlor, Alkoxy oder Acyloxy sind;

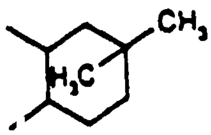 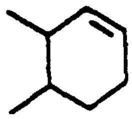 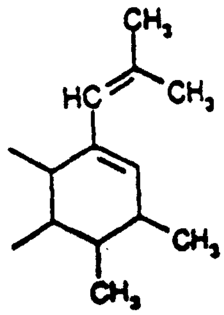 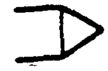

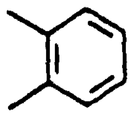 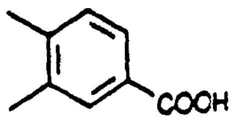 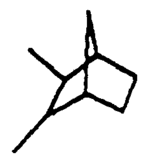

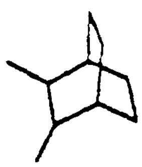 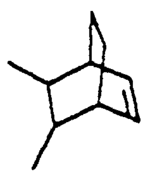 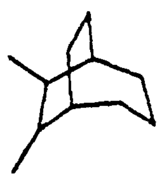 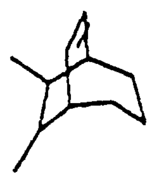

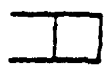 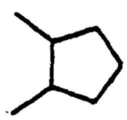

Bei den Resten Y und Z handelt es sich bevorzugt um divalente Kohlenwasserstoffreste wie Ethylen, Tetramethylen, Hexamethylen, Octamethylen und/ oder um Sauerstoff enthaltende divalente Kohlenwasserstoffe wie $-(CH_2)_2O(CH_2)_2-$, $-(CH_2)_2O(CH_2)_2O(CH_2)_2-$ oder Oligomere oder Polymere von diesen Verbindungen. Bevorzugt ist $-CHR^5-CH_2-$ oder $-CH_2-CHR^5-$ mit $R^5 = C_{6-18}$-Alkenyl. Besonders bevorzugt ist X = $-CH_2-CH_2-$ oder $-CHR^5-CH_2-$ oder $-CH_2-CHR^5-$ mit $R^5$ $C_{6-18}$-Alkenyl und Z = $-CH_2-CH_2-CH_2-$. Die Variable p kann Werte zwischen 0 und 10 annehmen, bevorzugt aber ist p = 0 oder 1. Am stärksten bevorzugt ist p = 0 und Z = $-CH_2-CH_2-CH_2-$.

Eine bevorzugte Verbindung I ist $(CH_3)_3Si-(O-Si(CH_3)_2)_n-(O-SiACH_3)_m-OSi-(CH_3)_3$ mit A = $CH_2-CH_2-CH_2-NH-CH_2-CH_2-NH_2$, besonders bevorzugt mit einer Viskosität von etwa 200 $mm^2/s$ und einer Aminzahl von 0,27. Die Umsetzung der Aminogruppen erfolgt vorzugsweise mit Octenylbernsteinsäureanhydrid.

Man erhält eine Verbindung (IV):

$$(CH_3)_3Si-(O-Si(CH_3)_2)_n-(O-SiBCH_3)_m-OSi(CH_3)_3$$

mit B:

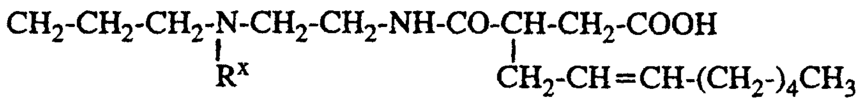

mit $R^x$:

$$C(O)\text{-}CH(CH_2\text{-}CH{=}CH\text{-}(CH_2\text{-})_4CH_3)\text{-}CH_2\text{-}COOH$$

Die Carboxylgruppen der Verbindungen gemäß Formel IV können sowohl als freie Carbonsäuren als auch in partieller oder vollständiger Salzform, beispielweise als Alkalimetallsalze wie Natrium- oder Kaliumsalze, als Ammoniumsalze oder als Alkylammoniumsalze vorliegen. Im allgemeinen werden sie in ihrer Salzform eingesetzt.

Als Amine - für die Erzeugung von Alkylammoniumsalzen - eignen sich prinzipiell alle primären, sekundären und tertiären Amine. Beispiele sind Methylamin, Dimethylamin, Trimethylamin, Ethylamin, Diethylamin, Triethylamin, prim., sec. oder tert. Isopropylamine oder andere Alkylamine, Morpholin, Anilin, Methylanilin, Dimethylanilin, Piperidin, N-Methylpiperidin, Tetramethylpiperidin, Pentamethylpiperidin, Tetramethylpiperidin-4-ol, Pentamethylpiperidin-4-ol, Ethanolamin, Diethanolamin, Triethanolamin, Propanolamin, 2-Amino-2-methyl-propanol oder ethoxyliertes Ethanolamin $H_2N\text{-}CH_2\text{-}CH_2\text{-}(O\text{-}CH_2\text{-}CH_2)_r\text{-}OH$ mit r = 1 - 20.

Hydroxyfunktionelle Amine wie Triethanolamin, Diethanolamin usw. eignen sich besonders, wenn das Produkt als Griffmittel verwendet werden soll.

Die erfindungsgemäße Lederhydrophobierung läßt sich auch durchführen, wenn die wäßrige Emulsion der Polysiloxane zusätzlich Paraffine, welche fest und/oder flüssig sein können, beispielsweise solche mit einem Schmelzpunkt von 20 bis 100°C, Paraffinöle oder Weißöle, Mineralöle, natürliche Fette oder natürliche Öle, beispielsweise Fischtran oder Knochenöl, oder synthetische oder natürliche Wachse, beispielsweise Polyethylenwachse, Polyisobutylenwachse, Bienenwachs oder Karnaubawachs, normalerweise in einer Menge von bis zu 90 Gew.-%, insbesondere bis zu 45 Gew.-%, enthält.

Als Emulgatoren eignen sich im Prinzip alle in wäßrigen Systemen oberflächenaktive Verbindungen nichtionischen, anionischen, kationischen oder amphoteren Charakters, die die eingesetzten Polysiloxane sowie Paraffine, Paraffinöle, Fette, Öle und Wachse ausreichend emulgieren und die Hydrophobierung nicht beeinträchtigen, insbesondere jedoch N-($C_9$- bis $C_{20}$-Acyl)aminosäuren mit 2 bis 6 C-Atomen im Aminosäuregrundkörper wie N-Oleoylsarkosin, N-Stearoylsarkosin, N-Lauroylsarkosin oder N-Isononanoylsarkosin; letztere liegen zumeist in Form ihrer Alkalimetall-, Ammonium-, Trialkanolaminsalze oder als Salze von Fettsäuren, z.B. der Ölsäure vor. Die Polysiloxan-Emulsion enthält üblicherweise 0,1 bis 30 Gew.-%, insbesondere 0,2 bis 25 Gew.-%, vor allem 2 bis 18 Gew.-% Emulgatoren, wobei auch Mischungen der genannten Emulgatoren eingesetzt werden können.

In einer bevorzugten Variante der vorliegenden Erfindung wird auf Emulgatoren verzichtet, da die Carboxyamid-Polysiloxane selbstemulgierend sind.

Die beschriebenen Polysiloxan-Emulsionen enthalten üblicherweise 3 bis 90 Gew.-%, insbesondere 5 bis 60 Gew.-%, besonders bevorzugt bis zu 40 Gew.-% carboxylfunktionalisierte Polysiloxane gemäß Formel IV oder IVa. Die Emulsionen werden normalerweise in Mengen von 0,1 bis 20 Gew.-%, insbesondere 0,5 bis 15 Gew.-%, bezogen auf das Falzgewicht des Leders bzw. das Naßgewicht der Pelze, eingesetzt. Es kann empfehlenswert sein, die beschriebenen Emulsionen (Konzentrate) im Verhältnis von 1:2 bis 1:5 mit Wasser zu verdünnen und der Arbeitsflotte bei der Lederhydrophobierung zuzugeben.

Die erfindungsgemäße Hydrophobierung kann einstufig oder auch zweistufig, während oder nach der Nachgerbung erfolgen. Zweckmäßige Gerbstoffe für die Nachgerbung sind vegetabilische Gerbstoffe, beispielsweise auf der Basis von Phenolsulfonsäure-Formaldehyd-Kondensaten. Als Farbstoffe, die gleichzeitig mitverwendet werden können, kommen beispielsweise die üblicherweise verwendeten sauren, substantiven oder basischen Anilinfarbstoffe in Betracht.

Die eigentliche erfindungsgemäße Hydrophobierung während oder nach der Nachgerbung erfolgt in der Regel unter Walken in einer geeigneten Vorrichtung, d.h. bei Flottenlängen von 50 bis 2000 %, bevorzugt 75 bis 400 %, bezogen auf das Falzgewicht des Leders oder Naßgewicht der Pelze, Temperaturen von 20 bis 60°C, bevorzugt 35 bis 50°C, wobei zu Beginn die pH-Werte in der Regel zwischen 4,5 und 8,0, bevorzugt 4,8 bis 5,5 liegen. Im allgemeinen ist die Hydrophobierung in einer Zeit von 20 bis 240, bevorzugt 30 bis 120 Minuten, beendet.

Am Ende der Hydrophobierung wird der Emulgator üblicherweise mit Säure, bevorzugt Ameisensäure, fixiert, indem ein pH-Wert von 3,0 bis 5,0, bevorzugt 3,8 bis 4,0, eingestellt wird.

Die Wirkung der Hydrophobierung kann durch eine Nachbehandlung mit einem in der Gerberei üblichen zwei-,

drei- oder vierwertigen Metallsalz, insbesondere mit einem basischen Chromsulfat, mit Aluminiumsulfat, Zirkonsulfat, Titansulfat, Calciumchlorid oder Magnesiumsulfat verstärkt werden. Von den genannten Salzen werden zweckmäßigerweise, bezogen auf das Falzgewicht des Leders oder Naßgewicht der Pelze, 0,5 bis 5 Gew.-%, bevorzugt 1 bis 2 Gew.-%, eingesetzt. Von den angegebenen Salzen sind basische Chromsulfate und Aluminiumsulfat bevorzugt.

Ein bevorzugtes Hydrophobiermittel auf Basis der Verbindungen gemäß Formel IV oder IVa enthält, bezogen auf die Menge der wäßrigen Emulsion,

| | |
|---|---|
| 1 bis 90 Gew.-% | an Carboxyamid-Polysiloxanen gemäß Formel IV oder IVa |
| 0 bis 30 Gew.-% | an Emulgatoren und |
| 0 bis 50 Gew.-% | an Paraffinen, Paraffinölen oder Weißölen, Mineralölen, natürlichen Fetten oder natürlichen Ölen oder synthetischen oder natürlichen Wachsen. |

Es ist ein wesentlicher Vorteil der vorliegenden Erfindung, daß man in der Regel mit geringeren Mengen an carboxylfunktionalisierten Polysiloxanen als mit den aus dem Stand der Technik bekannten, polysiloxanhaltigen Hydrophobiermitteln schon ausreichende Hydrophobiereffekte erzielt.

Auch arbeitet das vorliegende Hydrophobierverfahren ohne organische Lösungsmittel auf rein wäßriger Basis.

Man erhält lagerstabile Emulsionen auch bei Mitverwendung von Paraffinen oder Mineralölen.

Ein weiterer Vorteil liegt bei den durch nicht stöchiometrische Umsetzung mit Dicarbonsäureanhydriden erhältlichen, amphoteren Carboxyamid-Polysiloxanen in der besseren Säurestabilität aufgrund der noch vorhandenen, protonierbaren Aminogruppen. Gleichzeitig bleibt die gute Hydrophobierwirkung erhalten.

Die Erfindung wird nachfolgend an Beispielen näher erläutert.

**Beispiel 1**

a) 167 g (0,032 mol) eines Siloxans mit ca. 0,35 mmol/g Aminopropylresten und einer Molmasse von 5200 (SLM 441012/1 von Wacker) wurden in einem Rundkolben vorgelegt, auf 70°C erwärmt und gerührt. Zu dem Siloxan wurden über einen Pulvertrichter 6,4 g (0,064 mol) vorher gemahlenes Bernsteinsäureanhydrid so zugegeben, daß der Feststoff sofort durch den Rührer verwirbelt wurde und nichts an der Wand oder am Rührer anbuk. Das Gemisch wurde nun 2,5 h bei 70°C gerührt. In dieser Zeit setzt sich das Bernsteinsäureanhydrid vollständig um. Das Reaktionsgemisch wird nun auf 50°C abgekühlt. Gemäß $^{13}$C-NMR besitzt das Reaktionsprodukt folgende Struktur:

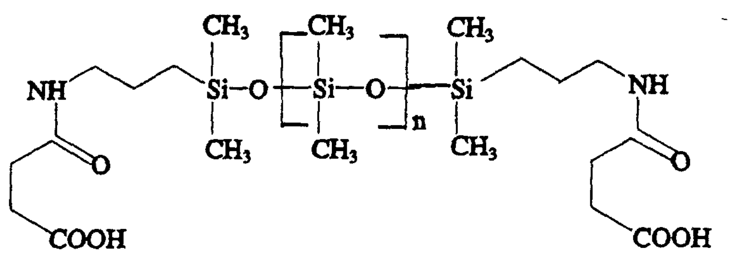

b) 5,85 g Morpholin wurden in 818 g Wasser gelöst, auf 50 - 60°C vorgewärmt und danach unter heftigem Rühren in das unter (a) beschriebene Reaktionsgemisch eingetragen. Schließlich gab man noch 2 g Ölsäure zu und rührt noch ca. 15 min weiter. Danach wurde ca. 10 min bei 50°C mit der Ultraturrax-Mischvorrichtung emulgiert. Die dabei entstandene Emulsion wurde nun im Homogenisator zu einer stabilen Emulsion verarbeitet. Siloxankonzentration: ca. 18 %, pH-Wert: ca. 9.

**Beispiel 2**

Ein Siloxan mit ca. 0,375 meq/g 3-(2-Aminoethyl)aminopropyl-Endgruppen und einer mittleren Molmasse von 5400 (IM47 Fa. Wacker) wurde zusammen mit Bernsteinsäureanhydrid [BSA] (s. Tabelle) in 40 g THF gelöst, verrührt

und 8 h bei 50°C gerührt. Anschließend wurde das THF am Vaku-umrotationsverdampfer entfernt. Das IR-Spektrum zeigte, daß sich das Bernsteinsäureanhydrid vollständig umgesetzt hatte.

Struktur des Produktes gemäß $^{13}$C-NMR:

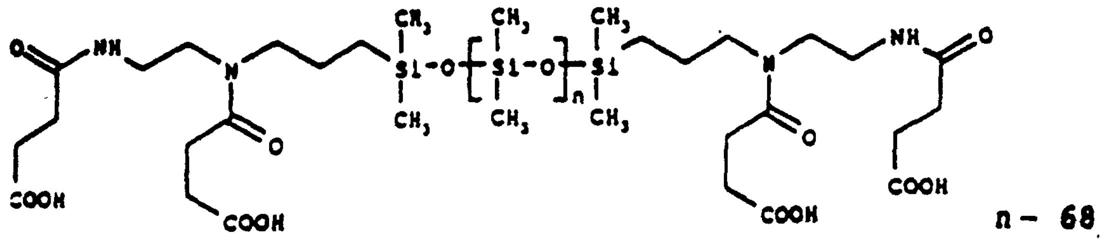

Die weitere Verarbeitung erfolgte gemäß Beispiel 1b, wobei statt Morpholin Ammoniak eingesetzt wurde. Ölsäure fand hier keine Verwendung.

**Zur Herstellung der Emulsion wurden verwendet:**

| Einsatzstoff | Menge | Anteil in der Emulsion |
|---|---|---|
| 3-(2-Aminoethyl)aminopropylsiloxan (IM47) | 108 g | 12,8 % |
| BSA | 8 g | 0,95 % |
| $NH_3$ | 2,1 g | 0,25 % |
| $H_2O$ | 728,4 g | 86,0 % |

## Beispiel 3

Gemäß Beispiel 1 wurde eine Siloxanemulsion hergestellt, wobei folgende Mengen der einzelnen Komponenten verwendet wurden. Ölsäure fand hier keine Verwendung.

| Einsatzstoff | Menge | Anteil in der Emulsion |
|---|---|---|
| 3-Aminopropylsiloxan (SLM441012/1) | 201,3 g | 19,2 % |
| BSA | 7,74 g | 0,74 % |
| Morpholin | 5,9 g | 0,56 % |
| $H_2O$ | 836 g | 79,5 % |

## Beispiel 4

Gemäß Beispiel 1 wurde eine Siloxanemulsion hergestellt, wobei folgende Mengen der einzelnen Komponenten verwendet wurden. Ölsäure fand hier keine Verwendung.

| Einsatzstoff | Menge | Anteil in der Emulsion |
|---|---|---|
| 3-Aminopropylsiloxan (SLM441012/1) | 203,1 g | 18,93 % |
| BSA | 7,8 g | 0,73 % |
| $NH_3$ | 1,5 g | 0,14 % |
| $H_2O$ | 860,5 g | 80,2 % |

## Beispiel 5

Ein Polydimethylsiloxan mit 3-(2-Aminoethyl)aminopropyl-Seitengruppen (Aminzahl = 0,277 meq/g), Trimethylsiloxy-Endgruppen und einer Molmasse von ca. 6500 g/mol wurde gemäß Beispiel 1 mit Bernsteinsäureanhydrid (BSA) umgesetzt und mit Wasser, Morpholin und Ölsäure zu einer Emulsion verarbeitet

| Einsatzstoff | Menge | Anteil in der Emulsion |
|---|---|---|
| 3-(2-Aminoethyl)amino propylsiloxan | 270 g | 17,81 % |
| BSA | 7,5 g | 0,49 % |
| $H_2O$ | 1230 g | 81,13 % |
| Morpholin | 6,6 g | 0,44 % |
| Ölsäure | 2 g | 0,13 |

**Struktur des Produktes gemäß $^{13}$C-NMR:**

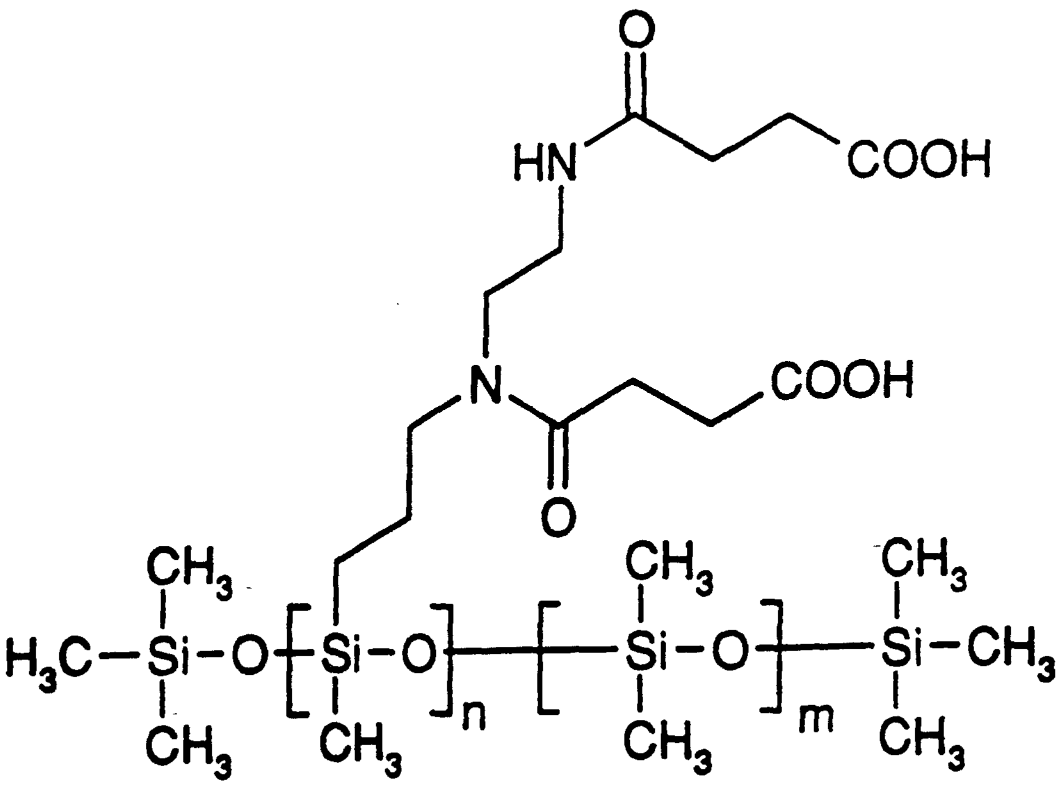

**Beispiel 6**

**Herstellung des carboxyfunktionellen Siloxans:**

In einen 2 l-Verdampferkolben wurden unter Argon 310 g eines Polydimethylsiloxans mit 3-(2-Aminoethyl) aminopropyl-Seitengruppen und Trimethylsiloxyendgruppen (Viskosität ca. 200 $mm^2/s$; Aminzahl: 0,283 meq/g) und 18,45 g n-Octenylbernsteinsäureanhydrid eingewogen. Die Komponenten wurden durch Rühren vermischt und anschließend 4 h bei 40°C gerührt.

**Herstellung einer wäßrigen Emulsion:**

In einem zweiten Rührbehälter wurden 1520 g Wasser, 16,92 g Morpholin und 34,4 g Ölsäure mit dem hergestellten carboxyfunktionellen Siloxan gemischt und anschließend homogenisiert. Man erhielt eine stabile Emulsion.

**Beispiel 7**

Ein entsprechend Beispiel 6 hergestelltes carboxyfunktionelles Siloxan wurde in eine Mischung aus 1520 g Wasser, 13,17 g Triethanolamin und 34,7 g Plurafac® LF 120 (nichtionisches Tensid auf Basis eines Fettalkoholalkoxylates) eingetragen und die Mischung anschließend homogenisiert. Man erhielt eine stabile Emulsion.

**Beispiel 8**

Ein entsprechend Beispiel 6 hergestelltes carboxyfunktionelles Siloxan wurde in eine Mischung aus 1520 g Wasser, 7,71 g Morpholin und 34,7 g Lutensol® ON 70 (nichtionisches Tensid auf Basis eines Oxoalkohols, hergestellt von BASF AG) eingetragen und die Mischung anschließend homogenisiert. Man erhielt eine stabile Emulsion.

**Beispiel 9**

**Herstellung eines Aminopolydimethylsiloxane**

In einem Rührbehälter wurden unter Schutzgas (Ar oder $N_2$) 1 kg Octamethylcyclotetrasiloxane (M = 296,62 g/mol), 56,83 g Hexamethyldisiloxane (0,35 mol; M = 162,38 g/mol) und 32,73 g Aminopropyltrimethoxysilan (0,18 mol; M = 179,29 g/mol) vorgelegt und unter Rühren mit 0,3 g KOH (85 %; 4,5 mmol; gemahlen) versetzt. Die Mischung wurde leicht trüb. Nach Erwärmen auf 130°C wurde das Gemisch 6 h bei dieser Temperatur gerührt. Sodann wurde auf 80°C abgekühlt und unter Rühren mit 0,27 g Eisessig (4,5 mmol) versetzt. Es wurde für 1 h bei 80°C gerührt. Sodann wurde auf 130°C aufgeheizt und unter vermindertem Druck (20 bis 30 mbar) wurden Leichtsieder abgezogen. Es wurden 1015 g Rückstand erhalten. Als Destillat wurden 35 g und in einer nachgeschalteten Kühlfalle 17 g aufgefangen. Das Destillat und Kühlfalleninhalt bestanden im wesentlichen aus nicht umgesetztem Cyclosiloxan und Hexamethyldisiloxan. Eine vollständige Umsetzung war nicht möglich, da es sich bei der Reaktion um eine Gleichgewichtsreaktion handelt.

**Die Analyse des Produktes ergab folgende Parameter:**

| | |
|---|---|
| Aminzahl: | 0,158 meq/g |
| Viskosität: | 64 $mm^2/s$ bei 25°C |

Si-NMR-spektroskopische Untersuchung zeigte, daß das Siloxan folgende Einheiten enthielt:

Als Endgruppen: $(CH_3)_3SiO_{1/2}$ und $CH_3O(CH_3)_2Si\text{-}O$
in der Kette $(CH_3)_2Si(O_{1/2})_2$
als Aminreste $R(OCH_3)Si(O_{1/2})_2$ und $RSi(O_{1/2})_3$ mit $R = CH_2CH_2CH_2NH_2$
die Aminzahl wurde nach PH-C17 bestimmt. Dazu wurden etwa 2 g des aminofunktionellen Siliconöls genau eingewogen und in 50 ml Toluol-Propanol-Gemisch (1:1) gelöst und mit 15 ml Eisessig versetzt. Sodann wurde mit einem Titroprozessor mit Perchlorsäure (0,1 mol/l in Eisessig) titriert. Als Elektrode wurde dabei eine kombinierte pH-Elektrode mit Schliffdiaphragma, innen gefüllt mit Lithiumchlorid gesättigt in Eisessig, außen gefüllt mit Lithiumperchlorat gesättigt in Eisessig eingesetzt. Der Äquivalenzpunkt wurde automatisch berechnet. Die Aminzahl ergab sich aus dem Produkt der Perchlorsäure (in ml) mal 0,1, geteilt durch die Menge an aminofunktionellem Silikonöl (in g).

**Herstellung der Siloxanemulsion**

1 kg des wie vorstehend hergestellten Aminopolydimethylsiloxans wurde unter Schutzgas (Ar oder $N_2$) auf 70°C erwärmt. 15,8 g Bernsteinsäureanhydrid (äquivalente Menge, bezogen auf die Aminogruppen) wurde direkt auf das Aminopolydimethylsiloxan gegeben. Es wurde für 4 h langsam bei 70°C gerührt, bis kein Bernsteinsäureanhydrid mehr sichtbar war. Sodann wurde auf 50°C abgekühlt. In einem zweiten Behälter wurden 4,19 kg Wasser, 20 g Morpholin und 11,5 Ölsäure vermischt und auf 50°C erwärmt. Das Siloxan wurde zu der wäßrigen Lösung gegeben und homogenisiert. Die Emulsion war etwa 20%ig.

**Anwendungstechnische Prüfung**

Für die anwendungstechnische Prüfung wurde chromgegerbtes Rind-wet-blue-Leder gemäß der nachfolgenden Vorschrift behandelt.

Zum Vergleich wurde das gleiche gegerbte und gefärbte Leder mit 2 Gew.-% Densodrin OF, bezogen auf das Falzgewicht, in analoger Weise hydrophobiert.

Ein Teil der Proben (Tabellen I, II, III; jeweils Proben Nr. 1, 3 und 4) wurden statt einer üblichen Hydrophobierung (Zugabemöglichkeit 1) nach dem Färben einer Tophydrophobierung (Zugabemöglichkeit 2) unterzogen.

Die Bedingungen für diese Arten der Behandlung der Leder sind nachfolgend ausgeführt:

## Hydrophobierung und Tophydrophobierung

Ausgangsmaterial: Chromrind wet blue
Falzstärke: 2,0 mm
Prozentangaben beziehen sich auf: Falzgewicht

| | | | | | |
|---|---|---|---|---|---|
| Waschen: | 200 | % | Wasser 35°C | | 10 min |
| | | Flotte ablassen | | | |
| Entsäuerung: | 100 | % | Wasser 35°C | | |
| | 2,0 | % | Neutrigan P 4 | xx | |
| | 1,3 | % | Natriumbicarbonat | xx | 90 min |

| | | | | |
|---|---|---|---|---|
| | | | pH-Flotte: ca. 6 | |
| | | | | Schnitt (BKG): |
| gleichmäßig | | | | |
| | | | Flotte ablassen | |
| Waschen: | 200 | % | Wasser 35°C | 10 min |
| | | | Flotte ablassen | |
| Nachgerbung: | 75 | % | Wasser 35°C | |
| | 3 | % | Relugan RE | 20 min |
| + | 3 | % | Mimosa | |
| | 3 | % | Relugan D | |
| | 1 | % | Relugan S | 20 min |
| Hydrophobierung: + | 8 | % | | Densodrin EN |
| Zugabemöglichkeit 1: | 2 | % | Si-Dispersion der Erfindung (bzw. Densodrin OF als Vergleich) | |
| 90 min | | | | |
| + | 1,7 | % | Ameisensäure 85 %ig | 3 x 10 min + 20 min |
| | | | | pH-Flotte: 3,7 |
| | | | Flotte ablassen | |
| Waschen: | 200 | % | Wasser 35°C | 10 min |
| | | | Flotte ablassen | |
| Top-Hydrophobierung: | 100 | % | Wasser 40°C | |
| Zugabemöglichkeit 2: | 2 | % | Si-Dispersion der Erfindung (bzw. Densodrin OF als Vergleich) | |
| | 30 min. | | | |
| | | | Flotte ablassen | |
| Fixierung: | 100 | % | Wasser 35°C | |
| | 2 | % | Chromitan FM | 90 min |
| | | | pH-Flotte: 3,7 | |
| | | | Flotte ablassen | |
| Waschen: 2x | 200 | % | Wasser 25°C | |
| | | | Flotte ablassen | 10 min |

Leder über Nacht auf Bock,
ausrecken
vakuumieren 2 min/80°C
hängetrocknen,
konditionieren,
stollen,
kiss-plate

Die in der vorstehend beschriebenen Weise gemäß Beispiel 1 (s. nachfolgende Tabelle I), Beispiel 3 (s. nachfolgende Tabelle II), Beispiel 4 (s. nachfolgende Tabelle III) und gemäß Beispiel 5 (s. nachfolgende Tabelle IV) hergestellten Siloxanemulsionen wurden, wie vorstehend beschrieben, in bezug auf ihre Hydrophobierwirkung auf Leder mit Vergleichsemulsionen verglichen. Als Meßparameter wurden für diese Untersuchungen die Wasseraufnahme in % nach Ablauf bestimmter Zeitspannen und die Zeit bis zum Wasserdurchtritt, ermittelt nach der Bally-Penetrometer-Prüfung in Anlehnung an DIN 53338/IUP 10, und die Zahl der zum Wasserdurchtritt führenden Stauchungen, ermittelt nach Maeser in Anlehnung an ASTMD 2099-70, verwendet. Die Vergleichsemulsionen (s. Tabellen I bis IV, jeweils Proben 1 oder 3) enthielten jeweils das bekannte Hydrophobiermittel Densodrin OF.

**Auswertung**

Wie sich aus Tabelle II ergibt, sind bei der erfindungsgemäßen Verwendung der Carboxyamid-Polysiloxane gemäß Beispiel 3 als Mittel zur Hydrophobierung von Leder die Eigenschaften des so behandelten Leders denjenigen des mit dem bekannten Hydrophobiermittel Densodrin OF behandelten Leders-gemessen als Wasserdurchtritt und Wasseraufnahme - zumindest ebenbürtig. Die Verwendung des bekannten Hydrophobiermittels ist jedoch unter Kostengesichtspunkten aufwendiger.

Auch aus Tabelle III ergibt sich, daß bei der erfindungsgemäßen Verwendung der Carboxyamid-Polysiloxane gemäß Beispiel 4 ebenso gute Eigenschaften erreicht werden wie bei Verwendung des bekannten Hydrophobiermittels Densodrin OF. Außerdem ist auch die Verwendung des Carboxyamid-Polysiloxans in diesem Falle wesentlich kostengünstiger.

Tabelle IV zeigt, daß bei der erfindungsgemäßen Verwendung der Carboxyamid-Polysiloxane gemäß Beispiel 5 die Zahl der Maeser-Stauchungen, die zum Wasserdurchtritt führt, gegenüber der Kontrolle um etwa 50% erhöht ist. Dies bedeutet, daß die erfindungsgemäß hydrophobierten Leder erst nach einer gegenüber der Kontrolle um 50% erhöhten Stauchungszahl wasserdurchlässig werden.

Hinzu kommt, daß die durch die erfindungsgemäße Verwendung von Carboxyamid-Polysiloxanen gemäß Formel IV bei der Hydrophobierung erhaltenen Leder einen angenehm weichen und seidigen Griff aufweisen.

## Tabelle I

## Bally-Penetrometer-Prüfung in Anlehnung an DIN 53338 / IUP 10

**Lederart:** **Oberleder**

| Proben-bezeichnung | Stauchung in % | angerauht | Wasserdurch-tritt nach: | Wasseraufnahme in % nach | | | | Maeser Stauchungen |
|---|---|---|---|---|---|---|---|---|
| | | | | 1 h | 3 h | 6 h | 24 h | |
| 1 | 15 | nein | kein n. 6 h | 11 | 17 | 20 | - | 3000 |
| 1 wdhl. | 15 | nein | 5 h | 10 | 17 | 21 | - | - |
| 2 | 15 | nein | kein n. 6 h | 11 | 17 | 21 | - | 1000 |
| 2 wdhl. | 15 | nein | 6 h | 10 | 16 | 19 | - | - |
| 3 | 15 | nein | 120 min | 12 | 24 | 34 | - | 500 |
| 3 wdhl. | 15 | nein | 180 min | 11 | 24 | 32 | - | - |
| 4 | 15 | nein | 90 min | 12 | 29 | 43 | - | 3700 |
| 4 wdhl. | 15 | nein | 120 min | 12 | 25 | 35 | - | - |

| | | |
|---|---|---|
| * | 1, 1 wdhl.: | Vergleichsbeispiel mit Densodrin OF + 8 % Densodrin EN |
| | 2, 2 wdhl.: | Beispiel 1 + 8 % Densodrin EN |
| | 3, 3 wdhl.: | Vergleichsbeispiel mit Densodrin OF, tophydrophobiert |
| | 4, 4 wdhl.: | Beispiel 1, tophydrophobiert |

**Tabelle II**

## Bally-Penetrometer-Prüfung in Anlehnung an DIN 53338 / IUP 10

**Lederart:** **Oberleder**

| Proben-bezeichnung* | Stauchung in % | angerauht | Wasserdurch-tritt nach Minuten | Wasseraufnahme in % nach | | | | Maeser Stauchungen |
|---|---|---|---|---|---|---|---|---|
| | | | | 1 h | 3 h | 6 h | 24 h | |
| 1 | 15 | nein | kein | 8 | 15 | 18 | 24 | - |
| 1 wdhl. | 15 | nein | kein | 8 | 14 | 18 | 22 | - |
| 2 | 15 | nein | n. 24 h | 8 | 15 | 19 | 26 | - |
| 2 wdhl. | 15 | nein | n. 24 h | 8 | 14 | 17 | 24 | - |
| 3 | 15 | nein | 150 | 9 | 17 | 24 | 34 | - |
| 3 wdhl. | 15 | nein | 140 | 9 | 16 | 21 | 25 | - |
| 4 | 15 | nein | 120 | 11 | 22 | 29 | 37 | - |
| 4 wdhl. | 15 | nein | 120 | 11 | 21 | 28 | 36 | - |

| | | |
|---|---|---|
| * | 1, 1 wdhl.: | Vergleichsbeispiel mit Densodrin OF + 8 % Densodrin EN |
| | 2, 2 wdhl.: | Beispiel 3 + 8 % Densodrin EN |
| | 3, 3 wdhl.: | Vergleichsbeispiel mit Densodrin OF, tophydrophobiert |
| | 4, 4 wdhl.: | Beispiel 3, tophydrophobiert |

## Tabelle III

## Bally-Penetrometer-Prüfung in Anlehnung an DIN 53338 / IUP 10

**Lederart:** **Oberleder**

| Proben-bezeichnung* | Stauchung in % | angerauht | Wasserdurchtritt nach Minuten | Wasseraufnahme in % nach | | | | Maeser Stauchungen |
|---|---|---|---|---|---|---|---|---|
| | | | | 1 h | 3 h | 6 h | 24 h | |
| 1 | 15 | nein | kein | 12 | 16 | 25 | 34 | - |
| 1 wdhl. | 15 | nein | 360 | 11 | 16 | 22 | 29 | - |
| 2 | 15 | nein | 360 | 10 | 15 | 20 | 26 | - |
| 2 wdhl. | 15 | nein | 180 | 11 | 16 | 24 | 32 | - |
| 3 | 15 | nein | kein | 11 | 15 | 22 | 31 | - |

| Probenbezeichnung* | Stauchung in % | angerauht | Wasserdurchtritt | Wasseraufnahme in % nach | | | | Maeser Stauchungen |
|---|---|---|---|---|---|---|---|---|
| 3 wdhl. | 15 | nein | kein nach Minuten | 10 | 15 | 21 | 27 | - |
| 4 | 15 | nein | 150 | 13 | 21 | 28 | 34 | - |
| 4 wdhl. | 15 | nein | 150 | 10 | 19 | 27 | 35 | - |

* 1, 1 wdhl.: Vergleichsbeispiel mit Densodrin OF + 8 % Densodrin EN

2, 2 wdhl.: Beispiel 4 + 8 % Densodrin EN

3, 3 wdhl.: Vergleichsbeispiel mit Densodrin OF, tophydrophobiert

4, 4 wdhl.: Beispiel 4, tophydrophobiert

## Tabelle IV

## Bally-Penetrometer-Prüfung in Anlehnung an DIN 53338 / IUP 10

**Lederart:** **Oberleder**

| Proben-bezeichnung* | Stauchung in % | angerauht | Wasserdurch-tritt nach Minuten | Wasseraufnahme in % nach | | | | Maeser Stauchungen |
|---|---|---|---|---|---|---|---|---|
| | | | | 1 h | 3 h | 6 h | 24 h | |
| 1 | 15 | nein | kein n. 6 h | 6 | 11 | 18 | - | 14600 |
| 2 | 15 | nein | kein n. 6 h | 5 | 10 | 14 | - | >20000 |

1: Vergleichsbeispiel mit Densodrin OF + 8 % Densodrin EN

2: Beispiel 5 + 8 % Densodrin EN

Die Anwendungstechnische Prüfung der Emulsion aus Beispiel 6 auf nicht angerauhtem Leder im Vergleich zu Densodrin OF ergab folgendes Resultat:

| | Bally-Penetrometer-Prüfung | | | | | | Maeser-test |
|---|---|---|---|---|---|---|---|
| eingesetztes Produkt | Stauchung % | Wasserdurchtritt nach | Wasseraufnahme in % nach | | | | Anzahl der Stauchungen (MW) |
| | | | 1 Std. | 3 Std. | 6 Std. | 24 Std. | |
| Bsp. 6 | 15 | > 24 Std. | 4 | 6 | 7 | 8 | 35000 |
| Vergleich | 15 | > 24 Std. | 3 | 6 | 7 | 8 | 23000 |

Die anwendungstechnische Prüfung der Emulsionen aus Beispielen 7 und 8 auf nicht angerauhtem Leder im Vergleich zu Densodrin OF ergab folgendes Resultat:

| | Bally-Penetrometer-Prüfung | | | | | | Maeser-test |
|---|---|---|---|---|---|---|---|
| eingesetztes Produkt | Stauchung % | Wasserdurchtritt nach | Wasseraufnahme in % nach | | | | Anzahl der Stauchungen |
| | | | 1 Std. | 3 Std. | 6 Std. | 24 Std. | |
| Bsp. 7 | 15 | > 24 Std. | 5 | 6 | 9 | 9 | 65000 |
| Bep. 8 | 15 | > 24 Std. | 3 | 6 | 8 | 8 | 20000 |
| Vergleich | 15 | > 24 Std. | 3 | 6 | 7 | 8 | 16000 |

Stabilität nach Verdünnung mit hartem Wasser (Emulsion/Wasser = 1/10)

| eingesetztes Produkt | stabil gegenüber hartem Wasser bis |
|---|---|
| Bsp. 6 | 20°dH |
| Bsp. 7 | > 60 °dH |
| Bsp. 8 | > 60 °dH |
| Densotrin OF | 15 °dH |

Die Produkte wiesen im Bally-Penetrometertest eine zu Densotrin OF vergleichbare Wirkung auf.

Im Maesertest wurde eine gegenüber Densotrin OF verbesserte Wirkung gefunden. Die Hartwasserstabilität der Produkt war wesentlich besser als die von Densotrin OF.

**Anwendungstechnische Untersuchung der Emulsion aus Beispiel 9**

Die Emulsion wurde auf hellbraunem Oberleder getestet. Zum Vergleich wurde Densotrin OF als Hydrophobiermittel eingesetzt.

Die Hartwasserstabilität der Emulsion betrug mehr als 60°dH, wogegen sie bei Densotrin, OF weniger als 15°dH betrug. Trotz geringer Mengen an Olsäure (0,2%) wurde eine gute Emulsionstabilität erhalten.

Die Ergebnisse der Bally-Penetrometer-Prüfung sind in der nachstehenden Tabelle wiedergegeben:

| Eingesetztes Produkt | Stauchung in % | angerauht | Wasserdurchtritt nach min. | Wasseraufnahme in % nach | | | |
|---|---|---|---|---|---|---|---|
| | | | | 1 Std. | 3 Std. | 6 Std. | 24 Std. |
| Dens. OF | 15 | nein | > 6 Std. | 6 | 10 | 13 | - |
| Bsp. 9 | 15 | nein | > 6 Std. | 6 | 11 | 13 | - |

**Patentansprüche**

1. Verwendung von Carboxyamid-Polysiloxanen der allgemeinen Formel IV

$$[R_a\text{-}\overset{\textstyle B}{\overset{|}{Si}}O_{(3-a)/2}]_n\text{-}[\overset{\textstyle R'_b}{\overset{|}{Si}}O_{(4-b)/2}]_m\text{-}[\overset{\textstyle R''_3}{\overset{|}{Si}}O_{1/2}]_k \qquad \text{(IV)}$$

wobei R, R' und R" jeweils unabhängig voneinander ausgewählt sind aus $C_{1-6}$-Alkyl oder Phenyl, oder Carboxyamid-Polysiloxanen der allgemeinen Formel IVa

$$[R_a\text{-}\overset{\textstyle B}{\overset{|}{Si}}O_{(3-a)/2}]_n\text{-}[\overset{\textstyle R'_b}{\overset{|}{Si}}O_{(4-b)/2}]_m\text{-}[\overset{\textstyle R''_2R'''}{\overset{|}{Si}}O_{1/2}]_k \qquad \text{(IVa)}$$

wobei R' und R" unabhängig voneinander ausgewählt sind aus $C_{1-6}$-Alkyl oder Phenyl, R und R''' unabhängig ausgewählt sind aus $C_{1-6}$Alkyl, $C_{1-6}$-Alkoxy, OH oder Phenyl, und die Zahl der Arten der durch

$$-\ [\overset{\textstyle R'_b}{\overset{|}{Si}}O_{(4-b)/2}]_m$$

definierten strukturellen Einheiten mindestens 1 beträgt und a aus dem Bereich $0 \leq a \leq 2$ und b aus dem Bereich $1 \leq b \leq 3$ ausgewählt ist, und die durch die Variablen m, n, k festgelegte Zahl der Wiederholungen der Arten der strukturellen Einheiten aus den Bereichen

$1 \leq n \leq 60$
$20 \leq m \leq 800$ und
$0 \leq k \leq \{(2-b)m + [(1-a)n + 2]\}$ ausgewählt ist,

sowie B einen organischen Rest der allgemeinen Formel V darstellt,

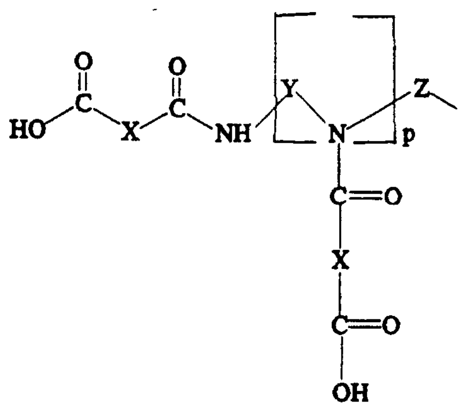

(V)

wobei p = 0 - 10 und

Y und Z unabhängig voneinander jeweils einen divalenten Kohlenwasserstoffrest aus der Gruppe der aliphatischen Kohlenwasserstoffe oder einen divalenten Alkoxyalkylrest darstellen, und

X ein divalenter Kohlenwasserstoffrest aus der Gruppe von $-(CH_2)_y-$ mit $2 \leq y \leq 6$, $-CH_2-CHR^5$ oder $CHR^5-CH_2-$ mit $R^5$ $C_{1-20}$-Alkyl oder $C_{2-20}$-Alkenyl, -CH=CH-, cyclischen oder bicyclischen, gesättigten oder ungesättigten Kohlenwasserstoffen oder der aromatischen Kohlenwasserstoffe darstellt,

wobei wahlweise ein Teil der Substituenten B durch die Substituenten A der nachfolgenden Formel II

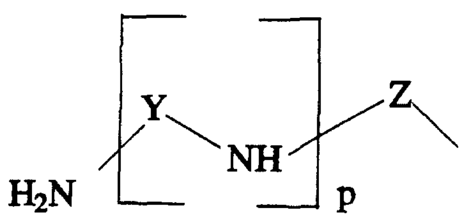

(II)

wobei Y, p, Z wie vorstehend definiert sind, oder durch die Substituenten C der nachfolgenden Formel VII

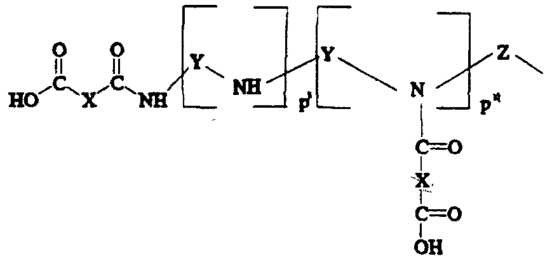

(VII)

wobei p'+ p" = p und X, Y, Z wie vorstehend definiert sind, ersetzt ist, wobei die Carboxyamid-Polysiloxane der genannten Formel IV oder IVa einen Carboxylgruppengehalt von 0,02 bis 1,0 meq/g sowie eine mittlere Molmasse (Zahlenmittel) $[M_n]$ im Bereich von $2 \times 10^3$ bis $60 \times 10^3$ g/Mol aufweisen, zur Hydrophobierung von Materialien faseriger Struktur, insbesondere von Leder oder Pelzfellen.

**2.** Verwendung nach Anspruch 1, wobei B einen organischen Rest der allgemeinen Formel V darstellt,

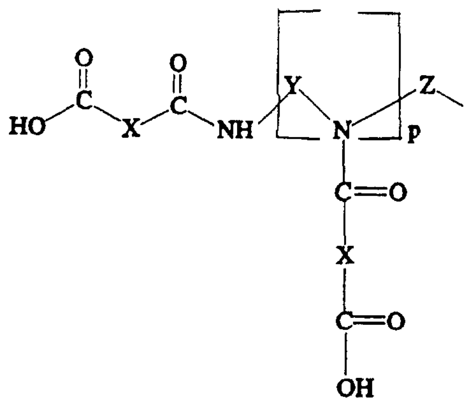

(V)

in dem p = O oder 1, X = $-CH_2CH_2-$, $-CH_2-CHR^5-$ oder $CHR^5-CH_2-$ mit $R^5$ $C_{1-20}$-Alkyl oder $C_{2-20}$-Alkenyl, -CH=CH- oder

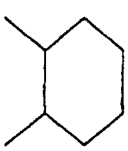
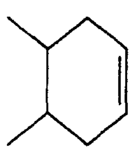
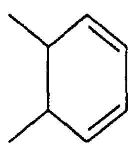
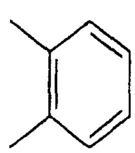
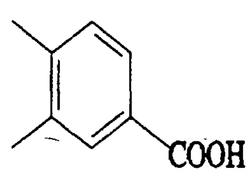

ist, und Y = $-CH_2CH_2-$ und Z = $-CH_2CH_2CH_2-$ sind.

**3.** Verwendung nach Anspruch 1 oder 2, wobei das Carboxyamid-Polysiloxan einen Carboxylgruppengehalt von 0,2 bis 0,5 meq/g aufweist und die mittlere Molmasse (Zahlenmittel) $[M_n]$ im Bereich von 3000 bis 10000 g/Mol liegt.

**4.** Verwendung nach Anspruch 1, 2 oder 3, wobei X $-CH_2-CHR^5$ oder $-CHR^5-CH_2-$ mit $R^5$ $C_{6-18}$-Alkenyl, -CH=CH- oder $-CH_2-CH_2-$ ist.

**5.** Verfahren zur Hydrophobierung von Leder, Pelzfellen oder anderen Materialien faseriger Struktur, umfassend:

- Aufbringen der bei der Verwendung nach einem der Ansprüche 1 bis 4 eingesetzten Carboxyamid-Polysiloxane in Form einer wäßrigen Emulsion, enthaltend

1 bis 90 Gew.-% des Carboxyamid-Polysiloxans,
0 bis 30 Gew.-% Emulgator,
0 bis 50 Gew.-% Paraffin, Paraffinöl, Mineralöle, natürliche Fette oder Öle oder synthetische oder natürliche Wachse

- Einwirkenlassen dieser Emulsion ohne oder mit gleichzeitiger Durchführung mechanischer Behandlungsschritte bei einer Temperatur von 20°C bis 60°C, einem pH-Wert zwischen 4,5 und 8,0 und Flottenlängen von 50% bis 2000% sowie
- Waschen und Trocknen.

**6.** Mittel zur Hydrophobierung von Leder in Form einer wäßrigen Emulsion, enthaltend

1 bis 90 Gew.-% eines Carboxyamid-Polysiloxans, wie es in einem der Ansprüche 1 bis 4 definiert ist,
0 bis 30 Gew.-% Emulgator,
0 bis 50 Gew.-% Paraffin, Paraffinöl, Mineralöle, natürliche Fette oder Öle oder synthetische oder natürliche Wachse.

## Claims

**1.** The use of carboxyamide-polysiloxanes of the formula IV

$$[R_a-\overset{\overset{\displaystyle B}{|}}{Si}O_{(3-a)/2}]_n-[\overset{\overset{\displaystyle R'_b}{|}}{Si}O_{(4-b)/2}]_m-[\overset{\overset{\displaystyle R''_3}{|}}{Si}O_{1/2}]_k \qquad (IV)$$

in which R, R' and R", each independently, are selected from $C_{1-6}$-alkyl or phenyl, or carboxyamide-polysiloxanes of the formula IVa

$$[R_a-\overset{\overset{\displaystyle B}{|}}{Si}O_{(3-a)/2}]_n-[\overset{\overset{\displaystyle R'_b}{|}}{Si}O_{(4-b)/2}]_m-[\overset{\overset{\displaystyle R''_2R'''}{|}}{Si}O_{1/2}]_k \qquad (IVa)$$

in which R' and R", each independently, are selected from $C_{1-6}$-alkyl or phenyl, R and R'", each independently, are selected from $C_{1-6}$-alkyl, $C_{1-6}$-alkoxy, OH or phenyl, and the number of types of structural units defined by

$$-\ [\overset{\overset{\displaystyle R'_b}{|}}{Si}O_{(4-b)/2}]_m$$

is at least one and a is selected from the range $0 \leq a \leq 2$ and b is selected from the range $1 \leq b \leq 3$, and the number of repetitions of the types of structural units which is defined by the variables m, n and k is selected from the ranges

$1 \leq n \leq 60$,
$20 \leq m \leq 800$ and
$0 \leq k \leq \{(2-b)m + [(1-a)n + 2]\}$,

and B is an organic radical of the formula V

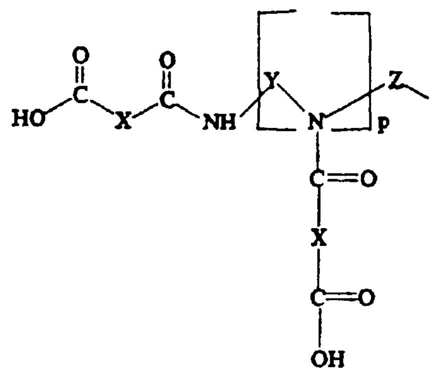

(V)

in which p = 0 - 10 and

Y and Z, each independently, are a divalent hydrocarbon radical from the group of aliphatic hydrocarbons or are a divalent alkoxyalkyl radical, and

X is a divalent hydrocarbon radical from the group of $-(CH_2)_y-$ where $2 \leq y \leq 6$, $-CH_2-CHR^5$ or $CHR^5-CH_2-$ where $R^5$ is $C_{1-20}$-alkyl or $C_{2-20}$-alkenyl, -CH=CH-, cyclic or bicyclic, saturated or unsaturated hydrocarbons or the aromatic hydrocarbons,

where optionally some of the substituents B are replaced by the substituents A of the following formula II

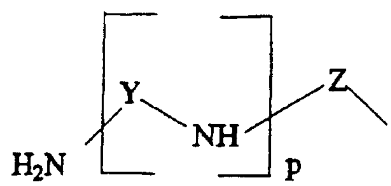

(II)

in which Y, p and Z are as defined above, or by the substituents C of the following formula VII

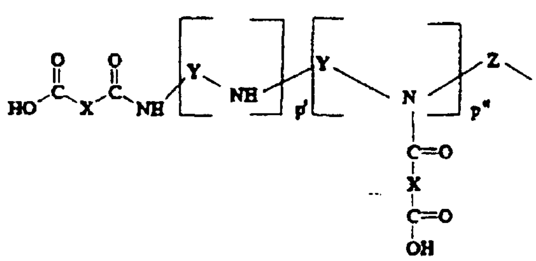

(VII)

in which p' + p" = p and X, Y and Z are as defined above,
the carboxyamide-polysiloxanes of the above formula IV or IVa having a carboxyl content of from 0.02 to 1.0 meq/g and an average molar mass (number average) $[M_n]$ in the range from 2 **H** $10^3$ to 60 **H** $10^3$ g/mol,
for hydrophobicizing materials of fibrous structure, especially leather or fur skins.

2. The use as claimed in claim 1, where B is an organic radical of the formula V

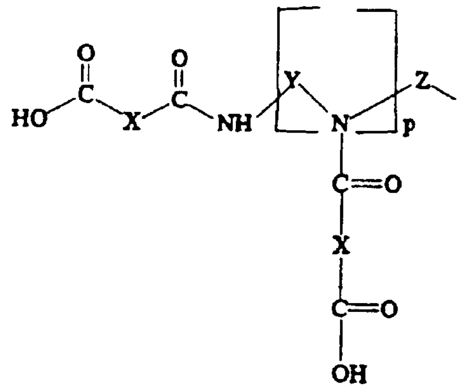

(V)

in which p = 0 or 1, X = $-CH_2CH_2-$, $-CH_2-CHR^5-$ or $CHR^5-CH_2-$ where $R^5$ is $C_{1-20}$-alkyl or $C_{2-20}$-alkenyl, -CH=CH- or

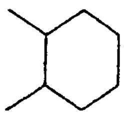 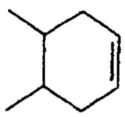 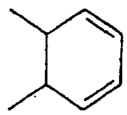 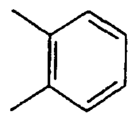 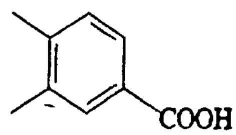

and Y = $-CH_2CH_2-$ and Z = $-CH_2CH_2CH_2-$.

**3.** The use as claimed in claim 1 or 2, where the carboxyamide-polysiloxane has a carboxyl content from 0.2 to 0.5 meq/g and the average molar mass (number average) $[M_n]$ is in the range from 3000 to 10,000 g/mol.

**4.** The use as claimed in claim 1, 2 or 3, where X is $-CH_2-CHR^5$ or $-CHR^5-CH_2-$ where $R^5$ is $C_{6-18}$-alkenyl, -CH=CH- or $-CH_2-CH_2-$.

**5.** A process for hydrophobicizing leather, fur skins or other materials of fibrous structure, comprising:

- applying the carboxyamide-polysiloxanes employed in connection with the use as claimed in any of claims 1 to 4, in the form of an aqueous emulsion comprising

  from 1 to 90 % by weight of the carboxyamide-polysiloxane,
  from 1 to 90% by weight of a carboxyamide-polysiloxane as defined in any of claims 1 to 4,
  from 0 to 30 % by weight of emulsifier, and
  from 0 to 50 % by weight of paraffin, paraffin oil, mineral oils, natural fats or oils or synthetic or natural waxes,

- allowing this emulsion to act, with or without the simultaneous implementation of mechanical treatment steps, at from 20 to 60°C, at a pH of from 4.5 to 8.0 and liquor lengths of from 50 % to 2000 %, and
- washing and drying.

**6.** A composition for hydrophobicizing leather, in the form of an aqueous emulsion, comprising

from 1 to 90% by weight of a carboxyamide-polysiloxane as defined in any of claims 1 to 4,
from 0 to 30 % by weight of emulsifier, and
from 0 to 50 % by weight of paraffin, paraffin oil, mineral oils, natural fats or oils or synthetic or natural waxes.

## Revendications

**1.** Utilisation de carboxyamidopolysiloxanes de formule générale IV

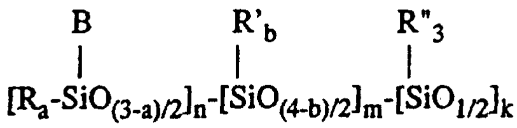

(IV)

dans laquelle R, R' et R" sont choisis chacun indépendamment des autres parmi les groupes alkyle en $C_{1-6}$ ou phényle, ou de carboxyamidopolysiloxanes de formule générale IVa

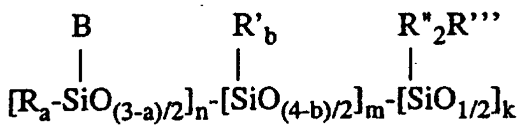

(IVa)

dans laquelle R' et R" sont chacun indépendamment de l'autre choisis parmi les groupes alkyle en $C_{1-6}$ ou phényle, R et R''' sont choisis indépendamment de l'autre parmi les groupes alkyle en $C_{1-6}$, alcoxy en $C_{1-6}$, OH ou phényle, et le nombre des types des motifs structuraux définis par

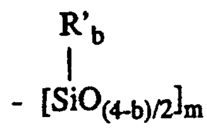

est d'au moins 1, et a est choisi dans l'intervalle $0 \leq a \leq 2$ et b dans l'intervalle $1 \leq b \leq 3$, et le nombre, défini par les variables m, n, k, des répétitions des types des motifs structuraux est choisi dans les intervalles suivants :

$1 \leq n \leq 60$
$20 \leq m \leq 800$, et
$0 \leq k \leq \{(2-b)m + [(1-a)n + 2]\}$,

et B représente un radical organique de formule générale V

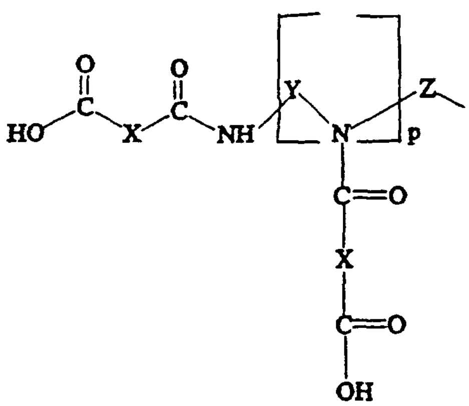

(V)

dans laquelle p vaut de 0 - 10, et

Y et Z représentent chacun indépendamment de l'autre un résidu hydrocarboné divalent choisi dans l'ensemble comprenant les hydrocarbures aliphatiques, ou encore un résidu alcoxyalkyle divalent, et
X est un résidu hydrocarboné divalent choisi dans l'ensemble comprenant $-(CH_2)_y-$, avec $2 \leq y \leq 6$, $-CH_2-CHR^5$

ou $CHR^5-CH_2-$, $R^5$ étant un groupe alkyle en $C_{1-20}$ ou alcényle en $C_{2-20}$, -CH=CH-, les hydrocarbures saturés ou insaturés, cycliques ou bicycliques, ou les hydrocarbures aromatiques,

où éventuellement une partie des substituants B est remplacée par les substituants A ayant la formule II ci-après

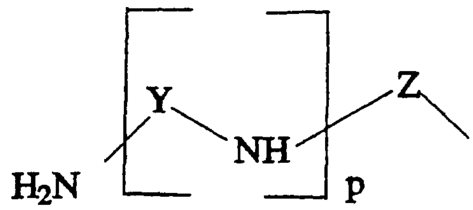

(II)

dans laquelle Y, p, Z, sont tels que définis ci-dessus, ou encore par des substituants C ayant la formule VII ci-après

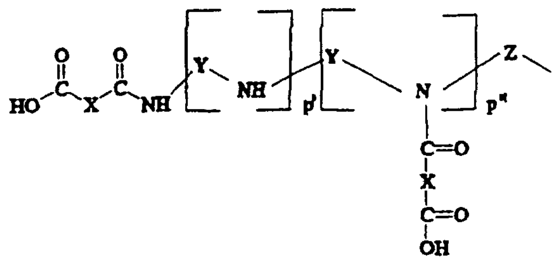

(VII)

dans laquelle p' + p" = p, et X, Y et Z sont tels que définis ci-dessus,

où les carboxyamidopolysiloxanes ayant les formules IV ou IVa mentionnées ci-dessus ont une teneur en groupes carboxyle de 0,02 à 1,0 méq/g, ainsi qu'une masse moléculaire moyenne en nombre $M_n$ comprise entre $2.10^3$ et $60.10^3$ g/mol,

pour rendre hydrophobes des matériaux à structure fibreuse, en particulier le cuir et les peaux à fourrure.

**2.** Utilisation selon la revendication 1, dans laquelle B est un radical organique de formule générale V

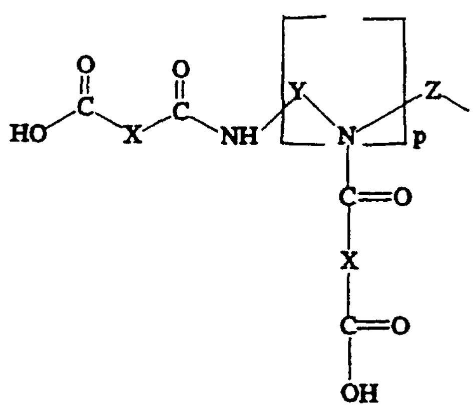

(V)

dans laquelle p vaut 0 ou 1, X est $-CH_2CH_2-$, $-CH_2-CHR^5-$ ou $CHR^5-CH_2-$, $R^5$ étant un groupe alkyle en $C_{1-20}$ ou alcényle en $C_{2-20}$, -CH=CH- ou

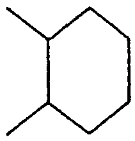 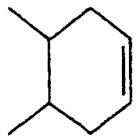 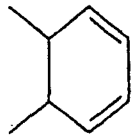 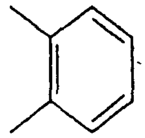 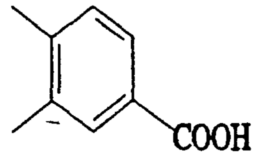

et Y est $-CH_2CH_2-$ et Z est $-CH_2CH_2CH_2-$.

**3.** Utilisation selon la revendication 1 ou 2, pour laquelle le carboxyamidopolysiloxane a une teneur en groupes carboxyle de 0,2 à 0,5 méq/g, et la masse moléculaire moyenne en nombre $M_n$ est comprise entre 3000 et 10 000 g/mol.

**4.** Utilisation selon la revendication 1, 2 ou 3, pour laquelle X est $-CH_2-CHR^5$ ou $-CHR^5-CH_2-$, $R^5$ étant un groupe alcényle en $C_{6-18}$, -CH=CH- ou $-CH_2-CH_2-$.

**5.** Procédé pour rendre hydrophobes le cuir, les peaux à fourrure ou d'autres matériaux à structure fibreuse, qui consiste :

- à mettre les carboxyamidopolysiloxanes utilisés lors de l'utilisation selon l'une des revendications 1 à 4 sous forme d'une émulsion aqueuse contenant

  1 à 90 % en poids du carboxyamidopolysiloxane,
  0 à 30 % en poids d'un émulsifiant,
  0 à 50 % en poids de paraffine, d'huile de paraffines, d'huiles minérales, d'huiles ou graisses naturelles ou de cires naturelles ou synthétiques,

- à laisser agir cette émulsion, sans mise en oeuvre ou avec mise en oeuvre simultanée d'étapes de traitement mécanique à une température de 20 à 60°C, à un pH compris entre 4,5 et 8,0 et pour une longueur de bain de 50 à 2000 %, et
- à effectuer un lavage et un séchage.

**6.** Produit pour rendre hydrophobe le cuir, sous forme d'une émulsion aqueuse contenant

1 à 90 % en poids d'un carboxyamidopolysiloxane tel que défini dans l'une des revendications 1 à 4,
0 à 30 % en poids d'un émulsifiant,
0 à 50 % en poids de paraffine, d'huile de paraffine, d'huiles minérales, d'huiles ou graisses naturelles ou de cires naturelles ou synthétiques.